# EUROPÄISCHE PATENTSCHRIFT

(11) **EP 3 865 635 B1**
(45) Veröffentlichungstag und Bekanntmachung des Hinweises auf die Patenterteilung: **07.12.2022**
(21) Anmeldenummer: 20157512.3
(22) Anmeldetag: 14.02.2020
(51) Int. Cl.: E04B 1/61, B63B 3/68, F16B 5/00

(54) **VERBINDUNGSVORRICHTUNG, SCHIFFSINNENWAND UND SCHIFFSINNENDECKE**
CONNECTING DEVICE, INTERIOR SHIP WALL AND INTERIOR SHIP CEILING
DISPOSITIF DE RACCORDEMENT, PAROI INTÉRIEURE DE NAVIRE ET PLAFOND INTÉRIEUR DE NAVIRE

(43) Veröffentlichungstag der Anmeldung: 18.08.2021
(73) Patentinhaber: Vedder GmbH, 59348 Lüdinghausen (DE)
(72) Erfinder: Füstmann, Michael, 59348 Lüdinghausen (DE); Böcker, Sebastian, 59348 Lüdinghausen (DE)
(74) Vertreter: Bourgeois, Christian

(56) Entgegenhaltungen:
- DE-A1- 4 238 524
- DE-C1- 10 119 038

## Beschreibung

Die Erfindung betrifft eine Vorrichtung zum Verbinden eines Plattenelements, insbesondere einer Schiffsinnenwand oder Schiffsinnendecke, mit einem weiteren Bauteil, insbesondere der Schiffsinnenwand oder Schiffsinnendecke, aufweisend wenigstens ein an dem Plattenelement befestigbares mechanisches Verbindungselement und wenigstens ein an dem weiteren Bauteil befestigbares weiteres mechanisches Verbindungselement, wobei die Verbindungselemente derart ausgebildet und relativ zueinander anordbar sind, dass sich die Verbindungselemente bei bestimmungsgemäß mit dem weiteren Bauteil verbundenem Plattenelement zumindest teilweise gegenseitig hintergreifen. Zudem betrifft die Erfindung eine Verwendung einer solchen Vorrichtung. Ferner betrifft die Erfindung eine Schiffsinnenwand und eine Schiffsinnendecke, jeweils aufweisend wenigstens ein Plattenelement und wenigstens ein mit dem Plattenelement verbindbares weiteres Bauteil.

Eine Schiffsinnenwand oder Schiffsinnendecke eines Schiffsausbaus, der eine Unterkonstruktion für dekorative Verkleidungselemente aufweisen kann und eine Begrenzung eines Nettoraums an Bord eines Schiffs darstellt, ist üblicherweise modular aufgebaut, um im zerlegten Zustand auf einfache Art und Weise in einen Schiffsinnenraum eingebracht werden zu können. Zudem kann eine solche Schiffsinnenwand oder Schiffsinnendecke eines Schiffsausbaus (im Folgenden zur Vereinfachung Schiffsinnenwand bzw. Schiffsinnendecke genannt) aufgrund ihres modularen Aufbaus, insbesondere am Montageort, auf einfache Art und Weise an die jeweiligen räumlichen Gegebenheiten des Schiffsinnenraums angepasst werden.

Von Vorteil ist, wenn Verbindungen zwischen einem Plattenelement und einem weiteren Bauteil einer Schiffsinnenwand oder einer Schiffsinnendecke zerstörungsfrei lösbar bzw. reversibel sind, da dann das Plattenelement auf einfache Art und Weise wieder aus seiner montierten Stellung entfernt werden kann, beispielsweise um einen hinter dem Plattenelement liegenden Bauraum, beispielsweise für Wartungs- und/oder Montagearbeiten, zugänglich zu machen oder eine technische Überprüfung bzw. Revision an der Schiffsinnenwand bzw. Schiffsinnendecke durchführen zu können. Die DE 101 19 038 C1 offenbart die Merkmale des Oberbegriffs des Anspruchs 1.

Hierzu ist es bekannt, ein Plattenelement einer Schiffsinnenwand oder einer Schiffsinnendecke mit einem mechanischen Verbindungselement auszustatten und ein weiteres Bauteil der Schiffsinnenwand bzw. Schiffsinnendecke, beispielsweise ein Bauteil einer Unterkonstruktion der Schiffsinnenwand bzw. Schiffsinnendecke, mit einem weiteren mechanischen Verbindungselement auszustatten, wobei die Verbindungselemente derart ausgebildet und relativ zueinander anordbar sind, dass sich die Verbindungselemente bei bestimmungsgemäß mit dem weiteren Bauteil verbundenem Plattenelement gegenseitig hintergreifen. Hierdurch kann das Plattenelement über die mechanische Verbindung, die durch das teilweise gegenseitige Hintergreifen der Verbindungselemente hergestellt wird, gewissermaßen an dem weiteren Bauteil aufgehängt bzw. von diesem getragen werden. Ein entsprechendes Verbindungselement kann auch als Falzleiste oder Schiebelasche bezeichnet werden. Dementsprechend kann eine entsprechend hergestellte mechanische Verbindung zwischen dem Plattenelement und dem weiteren Bauteil auch als Falzleistenkupplung bezeichnet werden.

Des Weiteren ist es bekannt, ein entsprechend mit einem weiteren Bauteil verbundenes Plattenelement über Kugelschnäpper gegen ein Verrutschen und Herabfallen zu sichern, wobei das Verrutschen eine Folge des Lösens der Falzleistenkupplung aufgrund von Vibrationen während eines Schiffsbetriebs oder durch eine unsachgemäße Handhabung während einer Bauphase sein kann. Die Kugelschnäpper müssen durch Monteure an Bord des Schiffs oder vorab während eines Zusammenbaus in einer Werkstatt verbaut werden, da eine sehr genaue Positionierung der Kugelschnäpper wesentlich für deren Funktion ist. Diese exakte Positionierung der Kugelschnäpper erfordert ein hohes Maß an Präzision und Erfahrung der Monteure.

Bei der Auslegung einer Schiffsinnenwand oder Schiffsinnendecke sollte darauf geachtet werden, dass möglichst einfache und platzsparende Konstruktionen verwendet werden, die ohne zusätzliche Elemente in verschiedenen Montageebenen auskommen. Um ein Designkonzept eines Schiffsinterieurs durch eine Revisionsmöglichkeit möglichst nicht zu beeinträchtigen, sollten Verbindungselemente möglichst unauffällig in eine Schiffsinnenwand oder Schiffsinnendecke integriert werden. Bisher mussten in der Regel verschiedene Unterkonstruktionselemente einer Schiffsinnenwand oder Schiffsinnendecke demontiert werden, um eine Zugänglichkeit überhaupt zu ermöglichen.

Eine Aufgabe der Erfindung ist es, eine einfache Sicherung gegen ein Lösen einer Falzleistenkupplung, über die ein Plattenelement, insbesondere einer Schiffsinnenwand oder Schiffsinnendecke, mit einem weiteren Bauteil, insbesondere der Schiffsinnenwand oder Schiffsinnendecke, verbunden ist, bereitzustellen.

Diese Aufgabe wird durch die unabhängigen Ansprüche gelöst. Vorteilhafte Ausgestaltungen sind in den abhängigen Ansprüchen, der nachfolgenden Beschreibung und den Figuren wiedergegeben, wobei diese Ausgestaltungen jeweils für sich genommen oder Kombination von wenigstens zwei dieser Ausgestaltungen miteinander einen vorteilhaften und/oder weiterbildenden Aspekt der Erfindung darstellen können.

Eine erfindungsgemäße Vorrichtung zum Verbinden eines Plattenelements, insbesondere einer Schiffsinnenwand oder Schiffsinnendecke, mit einem weiteren Bauteil, insbesondere der Schiffsinnenwand oder Schiffsinnendecke, weist wenigstens ein an dem Plattenelement befestigbares mechanisches Verbindungselement und wenigstens ein an dem weiteren Bauteil befestigbares weiteres mechanisches Verbindungselement auf, wobei die Verbindungselemente derart ausgebildet und relativ zueinander anordbar sind, dass sich die Verbindungselemente bei bestimmungsgemäß mit dem weiteren Bauteil verbundenem Plattenelement zumindest teilweise gegenseitig hintergreifen. Zudem weist die erfindungsgemäße Vorrichtung wenigstens eine Verbindungseinrichtung auf, mittels der das Plattenelement derart mit dem weiteren Bauteil verbindbar ist, dass die Verbindungselemente mit einer Kraft aneinander gekoppelt sind, die parallel zu einer Verbindungsebene, in der Verbindungsabschnitte der sich zumindest teilweise gegenseitig hintergreifenden Verbindungselemente zumindest teilweise aneinander anliegen, und entgegen einer Löserichtung wirkt, in der die Verbindungselemente voneinander lösbar sind.

Erfindungsgemäß wird das über die Verbindungselemente mit dem weiteren Bauteil verbundene Plattenelement bei sich zumindest teilweise gegenseitig hintergreifenden Verbindungselementen mittels der Verbindungseinrichtung an dem weiteren Bauteil gesichert, und zwar gegen eine Verlagerung des Plattenelements parallel zu und in der Löserichtung relativ zu dem weiteren Bauteil. Hierdurch werden gleichzeitig die Verbindungselemente in der Verbindungsstellung aneinander gesichert, in der sich die Verbindungselemente zumindest teilweise gegenseitig hintergreifen, und zwar ebenfalls gegen eine Verlagerung der Verbindungselemente relativ zueinander in der Löserichtung. Dadurch kann zuverlässig verhindert werden, dass sich die Verbindungselemente aufgrund von Vibrationen während eines Betriebs eines entsprechend ausgestatteten Schiffs in Löserichtung voneinander wegbewegen, was insbesondere zur Folge haben könnte, dass die durch das zumindest teilweise gegenseitige Hintergreifen der Verbindungselemente gebildete Falzleistenkupplung gelöst wird. Dadurch würde sich das Plattenelement von dem weiteren Bauteil lösen, was es zu verhindern gilt. Mit der Erfindung wird also eine einfache Sicherung gegen ein Lösen der durch die Verbindungselemente gebildeten Falzleistenkupplung bereitgestellt.

Zudem kann die Falzleistenkupplung, beispielsweise zur Durchführung von Revisionsarbeiten, manuell und ohne den Einsatz von Werkzeug gelöst werden, indem das Plattenelement in Löserichtung relativ zu dem weiteren Bauteil bewegt wird, bis sich die Verbindungselemente nicht mehr gegenseitig hintergreifen. Ebenso kann das Verbinden des Plattenelements mit dem weiteren Bauteil mittels der erfindungsgemäßen Vorrichtung ohne den Einsatz von Werkzeug erfolgen, indem das Plattenelement entgegen der Löserichtung relativ zu dem weiteren Bauteil bewegt wird, bis sich die Verbindungselemente zumindest teilweise gegenseitig hintergreifen und die Verbindungseinrichtung wirksam ist. Die erfindungsgemäße Vorrichtung ermöglicht somit eine deutliche Reduzierung eines zur Herstellung einer Schiffsinnenwand oder Schiffsinnendecke erforderlichen Montageaufwands.

Die erfindungsgemäße Vorrichtung kann zur Erstausstattung eines Schiffsinterieurs bzw. Schiffsausbaus oder zur Nachrüstung eines Schiffsinterieurs verwendet werden. In letzterem Fall ist die Vorrichtung vorzugsweise derart ausgebildet, dass sie mit herkömmlichen Schiffsinnenwänden oder Schiffsinnendecken bzw. deren Konstruktionen kombiniert werden kann, ohne dass an den Schiffsinnenwänden bzw. Schiffsinnendecken bauliche Veränderungen oder Anpassungen erforderlich sind.

Da eine Einbausituation innerhalb eines Schiffsprojekts teilweise variieren kann, ist die erfindungsgemäße Vorrichtung vorzugsweise derart standardisiert, dass die gesamte die Vorrichtung aufweisende Schiffsinnenwand oder Schiffsinnendecke, insbesondere projektübergreifend, möglichst flexibel und variabel weitgehend unabhängig von Maßen und Positionen eingesetzt werden kann.

Gegenüber der eingangs beschriebenen Verwendung von Kugelschnäppern zur Sicherung einer Einbaustellung eines Plattenelements weist die erfindungsgemäße Sicherung solcher Einbaustellungen einen deutlich vereinfachten Aufbau auf. Da gemäß der Erfindung solche Kugelschnäpper nicht aufwendig vorab montiert werden müssen, lässt sich eine Schiffsinnenwand oder Schiffsinnendecke unter Verwendung der erfindungsgemäßen Vorrichtung deutlich schneller herstellen. Ein Nachteil der Verwendung von Kugelschnäppern gegenüber der vorliegenden Erfindung liegt insbesondere im höheren Bedarf an Zwischenraum zwischen den beiden miteinander zu verbindenden Elementen (Plattenelement, weiteres Bauteil), da Kugelschnäpper eine höhere Einbautiefe haben. Daher müssen bisher gegebenenfalls einzelne Komponenten eines Kugelschnäppers in eine Ebene mindestens eines der miteinander zu verbindenden Elemente eingelassen werden, um keinen Konflikt mit Schiebelaschen/Falzleistenhalterungen zu bekommen. Das Plattenelement kann die äußere sichtbare Oberfläche einer Schiffsinnenwand oder Schiffsinnendecke bilden. Das mechanische Verbindungselement kann unmittelbar oder über wenigstens ein weiteres Element an dem Plattenelement befestigt werden. Das weitere Bauteil kann ein Bauteil einer Unterkonstruktion einer Schiffsinnenwand oder Schiffsinnendecke sein. Das weitere mechanische Verbindungselement kann unmittelbar oder über wenigstens ein weiteres Element mittelbar an dem weiteren Bauteil befestigt werden. Die weiteren Elemente können Bestandteile der erfindungsgemäßen Vorrichtung oder davon unabhängige Elemente sein.

Jedes Verbindungselement kann einen Befestigungsabschnitt aufweisen, über den das Verbindungselement an dem Plattenelement bzw. dem weiteren Bauteil befestigbar ist. Zudem weist jedes Verbindungselement einen Verbindungsabschnitt auf, der bei bestimmungsgemäß mit dem weiteren Bauteil verbundenem Plattenelement teilweise oder vollständig hinter den Verbindungsabschnitt des weiteren Verbindungselements greift, wobei die Verbindungsabschnitte hierbei parallel zueinander ausgerichtet sind und in der Verbindungsebene aneinander anliegen. Der Befestigungsabschnitt des jeweiligen Verbindungselements kann versetzt zu dem Verbindungsabschnitt des Verbindungselements angeordnet sein, wodurch das Verbindungselement gewissermaßen S-förmig ausgebildet ist. Hierdurch kann beispielsweise das zumindest teilweise gegenseitige Hintergreifen der Verbindungselemente begrenzt werden, indem der Verbindungsabschnitt von wenigstens einem Verbindungselement an einer Stufe bzw. einem stufenförmigen Übergangsbereich zwischen dem Befestigungsabschnitt und dem Verbindungsabschnitt des weiteren Verbindungselements anschlägt. Wenigstens ein Verbindungselement kann teilweise oder vollständig aus einem Kunststoff, einem faserverstärkten Kunststoff, einem Metall oder einer Metalllegierung hergestellt sein.

Gemäß der ersten Alternative der Erfindung weist die Verbindungseinrichtung wenigstens ein an dem Plattenelement befestigbares Magnetelement und wenigstens ein an dem weiteren Bauteil befestigbares weiteres Magnetelement auf, wobei die Magnetelemente derart ausgebildet und relativ zueinander und zu den Verbindungselementen anordbar sind, dass die Magnetelemente bei sich zumindest teilweise gegenseitig hintergreifenden Verbindungselementen derart nahe beieinander oder in Kontakt miteinander angeordnet sind, dass zwischen den Magnetelementen eine magnetische Anziehungskraft gegeben ist, die parallel zu der Verbindungsebene, in der Verbindungsabschnitte der sich zumindest teilweise gegenseitig hintergreifenden Verbindungselemente zumindest teilweise aneinander anliegen, und entgegen der Löserichtung wirkt, in der die Verbindungselemente voneinander lösbar sind. Das über die Verbindungselemente mit dem weiteren Bauteil verbundene Plattenelement wird bei sich zumindest teilweise gegenseitig hintergreifenden Verbindungselementen mittels der magnetischen Verbindungseinrichtung an dem weiteren Bauteil gesichert, und zwar gegen eine Verlagerung des Plattenelements parallel zu und in der Löserichtung relativ zu dem weiteren Bauteil. Hierdurch werden gleichzeitig die Verbindungselemente in der Verbindungsstellung aneinander gesichert, in der sich die Verbindungselemente zumindest teilweise gegenseitig hintergreifen, und zwar ebenfalls gegen eine Verlagerung der Verbindungselemente relativ zueinander in der Löserichtung. Dadurch kann zuverlässig verhindert werden, dass sich die Verbindungselemente aufgrund von Vibrationen während eines Betriebs eines entsprechend ausgestatteten Schiffs in Löserichtung voneinander wegbewegen, was insbesondere zur Folge haben könnte, dass die durch das zumindest teilweise gegenseitige Hintergreifen der Verbindungselemente gebildete Falzleistenkupplung gelöst wird. Dadurch würde sich das Plattenelement von dem weiteren Bauteil lösen, was es zu verhindern gilt. Mit dieser vorteilhaften Ausgestaltung wird also eine einfache Sicherung gegen ein Lösen der durch die Verbindungselemente gebildeten Falzleistenkupplung bereitgestellt.

Das Magnetelement und/oder das weitere Magnetelement kann als Dauermagnet ausgebildet sein. Das Magnetelement und/oder das weitere Magnetelement kann beispielsweise unter Verwendung einer Neodym aufweisenden Legierung hergestellt sein. Das Magnetelement kann unmittelbar oder über wenigstens ein weiteres Element mittelbar an dem Plattenelement befestigt werden. Das weitere Magnetelement kann unmittelbar oder über wenigstens ein weiteres Element mittelbar an dem weiteren Bauteil befestigt werden. Die weiteren Elemente können Bestandteile der erfindungsgemäßen Vorrichtung oder davon unabhängige Elemente sein.

Die magnetische Verbindungeinrichtung kann eingerichtet sein, eine magnetische Anziehungskraft mit einem Mindestwert in Höhe von 15 N zu erzeugen. Die magnetische Anziehungskraft wirkt parallel zu oder in der Verbindungsebene, in der die Verbindungsabschnitte der sich zumindest teilweise gegenseitig hintergreifenden Verbindungselemente teilweise oder vollständig aneinander anliegen. Zudem wirkt die magnetische Anziehungskraft entgegen der Löserichtung, in der die Verbindungselemente voneinander lösbar sind. Die Löserichtung verläuft parallel zu der Verbindungsebene und ist senkrecht zu dem gerade ausgebildeten Übergangsbereich zwischen dem Befestigungsabschnitt und dem Verbindungsabschnitt des jeweiligen Verbindungselements ausgerichtet.

Gemäß einer weiteren vorteilhaften Ausgestaltung weist die magnetische Verbindungseinrichtung wenigstens eine an dem Plattenelement befestigbare Halteeinheit, an der das Magnetelement festgelegt ist, und wenigstens eine an dem weiteren Bauteil befestigbare weitere Halteeinheit, an der das weitere Magnetelement festgelegt ist, auf, wobei das Verbindungselement über die Halteeinheit mit dem Plattenelement verbindbar ist und das weitere Verbindungselement über die weitere Halteeinheit mit dem weiteren Bauteil verbindbar ist. Hierbei ist das Verbindungselement über die Halteeinheit mittelbar an dem Plattenelement befestigbar und das weitere Verbindungselement über die weitere Halteeinheit mittelbar an dem weiteren Bauteil befestigbar.

Gemäß einer weiteren vorteilhaften Ausgestaltung sind die Halteeinheiten gleich ausgebildet. Dies reduziert Herstellungskosten der Vorrichtung, da lediglich eine einzige Formgebung einer Halteeinheit in Form von Gleichteilen realisiert werden muss.

Gemäß einer weiteren vorteilhaften Ausgestaltung weist die Vorrichtung wenigstens ein gemeinsames mechanisches Verbindungsmittel auf, über das einerseits das Verbindungselement und die Halteeinheit an dem Plattenelement oder andererseits das weitere Verbindungselement und die weitere Halteeinheit an dem weiteren Bauteil befestigbar sind. Hierdurch wird der Montageaufwand weiter reduziert. Hierzu kann beispielsweise ein Bohrungsbild eines Verbindungselements auf die damit verbundene Halteeinheit übertragen werden, sodass Bohrungen des Verbindungselements fluchtend zu Bohrungen der damit verbundenen Halteeinheit angeordnet werden können, wonach ein Abschnitt des gemeinsamen mechanischen Verbindungsmittels durch die jeweilig zueinander fluchtenden Bohrungen hindurchgeführt werden kann, um das Verbindungselement und die Halteeinheit an dem Plattenelement oder dem weiteren Bauteil zu befestigen. Durch diese Ausgestaltung ist kein nachträgliches Justieren erforderlich, was den Montageaufwand weiter reduziert.

Gemäß einer weiteren vorteilhaften Ausgestaltung ist die Halteeinheit und/oder die weitere Halteeinheit zumindest teilweise aus einem Kunststoff, einem faserverstärkten Kunststoff, einem Metall oder einer Metalllegierung hergestellt. Die Auswahl des Werkstoffs für die Halteeinheit bzw. weitere Halteeinheit kann unter Berücksichtigung von mechanischen und/oder chemischen Einflüssen auf die Halteeinheit erfolgen, um eine maximale Dauerhaftigkeit der Vorrichtung sicherzustellen.

Gemäß einer weiteren vorteilhaften Ausgestaltung ist die Halteeinheit und/oder die weitere Halteeinheit ein Stanzbauteil, ein Gussbauteil oder ein 3D-Druck-Bauteil. Hierdurch lassen sich die Halteeinheit bzw. weitere Halteeinheit auf einfache Art und Weise und schnell in relativ großer Stückzahl herstellen. Das Stanzbauteil kann durch Stanzen oder Laserschneiden aus einem gezogenen Aluminiumprofil hergestellt sein.

Gemäß der zweiten Alternative der Erfindung weist die Verbindungseinrichtung wenigstens eine an dem Plattenelement befestigbare Halteeinheit, über die das Verbindungselement mit dem Plattenelement verbindbar ist, wenigstens eine an dem weiteren Bauteil befestigbare weitere Halteeinheit, über die das weitere Verbindungselement mit dem weiteren Bauteil verbindbar ist, und wenigstens eine im Querschnitt U-förmig ausgebildete Klemmfeder auf, wobei jede Halteeinheit wenigstens einen U-förmig ausgebildeten Halteabschnitt aufweist, wobei die Klemmfeder teilweise unverlierbar in eine Aufnahme des Halteabschnitts der Halteeinheit und teilweise unverlierbar in eine Aufnahme des Halteabschnitts der weiteren Halteeinheit einfügbar ist. Das über die Verbindungselemente mit dem weiteren Bauteil verbundene Plattenelement wird bei sich zumindest teilweise gegenseitig hintergreifenden Verbindungselementen mittels dieser mechanischen Verbindungseinrichtung an dem weiteren Bauteil gesichert, und zwar gegen eine Verlagerung des Plattenelements parallel zu und in der Löserichtung relativ zu dem weiteren Bauteil. Hierdurch werden gleichzeitig die Verbindungselemente in der Verbindungsstellung aneinander gesichert, in der sich die Verbindungselemente zumindest teilweise gegenseitig hintergreifen, und zwar ebenfalls gegen eine Verlagerung der Verbindungselemente relativ zueinander in der Löserichtung. Dadurch kann zuverlässig verhindert werden, dass sich die Verbindungselemente aufgrund von Vibrationen während eines Betriebs eines entsprechend ausgestatteten Schiffs in Löserichtung voneinander wegbewegen, was insbesondere zur Folge haben könnte, dass die durch das zumindest teilweise gegenseitige Hintergreifen der Verbindungselemente gebildete Falzleistenkupplung gelöst wird. Dadurch würde sich das Plattenelement von dem weiteren Bauteil lösen, was es zu verhindern gilt. Mit dieser vorteilhaften Ausgestaltung wird also eine einfache Sicherung gegen ein Lösen der durch die Verbindungselemente gebildeten Falzleistenkupplung bereitgestellt.

Die Klemmfeder kann teilweise oder vollständig aus einem Blech hergestellt sein. Die Klemmfeder und die Halteabschnitte können derart ausgebildet und baulich aufeinander abgestimmt sein, dass über die Klemmfeder eine Schnappverbindung oder Rastverbindung zwischen den beiden Halteabschnitten realisiert ist. Die Klemmfeder kann auch als in die Aufnahmen der Halteabschnitte einschiebbare Einschubfeder oder Einschubspange ausgebildet sein. Die Halteabschnitte der mechanischen Verbindungseinrichtung können entsprechend des oben genannten Halteabschnitten der magnetischen Verbindungseinrichtung ausgebildet sein, so dass die Halteabschnitte wahlweise mittels einer Klemmfeder oder mittels Magnetelementen miteinander verbunden werden können.

Die mechanische Verbindungeinrichtung kann eingerichtet sein, eine Kraft mit einem Mindestwert in Höhe von 15 N zu erzeugen. Diese Kraft wirkt parallel zu oder in der Verbindungsebene, in der die Verbindungsabschnitte der sich zumindest teilweise gegenseitig hintergreifenden Verbindungselemente teilweise oder vollständig aneinander anliegen. Zudem wirkt die Kraft entgegen der Löserichtung, in der die Verbindungselemente voneinander lösbar sind.

Gemäß einer weiteren vorteilhaften Ausgestaltung weist die Klemmfeder zwei über einen Steg miteinander verbundene Klemmschenkel auf, wobei jeder Halteabschnitt zwei parallel zueinander ausgerichtete Schenkel aufweist, an deren freien Enden jeweils ein nach innen ragender Vorsprung ausgebildet ist, wobei die Vorsprünge aufeinander zu verlaufen und einen Abstand voneinander aufweisen und wobei an jedem Klemmschenkel eine quer zu einer Längserstreckung des Klemmschenkels verlaufende Sicke ausgebildet ist, in die zwei aneinander anliegende Vorsprünge der beiden Halteabschnitte eingreifen. Die Vorsprünge rasten somit in die jeweilige Sicke ein, um eine Rastverbindung bzw. Schnappverbindung auszubilden. Die Klemmfeder kann in seinem in die Aufnahmen an den Halteabschnitten eingefügten Zustand durch die Kontakte mit den Halteabschnitten elastisch verformt sein.

Mit der Erfindung wird zudem eine Verwendung einer Vorrichtung nach einer der oben genannten Ausgestaltungen oder einer Kombination von wenigstens zwei dieser Ausgestaltungen miteinander zum Verbinden eines Plattenelements, insbesondere einer Schiffsinnenwand oder einer Schiffsinnendecke, mit einem weiteren Bauteil, insbesondere der Schiffsinnenwand oder Schiffsinnendecke, vorgeschlagen. Mit der Verwendung sind die oben mit Bezug auf die Vorrichtung genannten Vorteile entsprechend verbunden.

Eine erfindungsgemäße Schiffsinnenwand weist wenigstens ein Plattenelement, wenigstens ein mit dem Plattenelement verbindbares weiteres Bauteil und wenigstens eine Vorrichtung nach einer der oben genannten Ausgestaltungen oder einer Kombination von wenigstens zwei dieser Ausgestaltungen miteinander auf, wobei das Plattenelement mittels der Vorrichtung mit dem weiteren Bauteil verbindbar ist.

Mit der Schiffsinnenwand sind die oben mit Bezug auf die Vorrichtung genannten Vorteile entsprechend verbunden.

Eine erfindungsgemäße Schiffsinnendecke weist wenigstens ein Plattenelement, wenigstens ein mit dem Plattenelement verbindbares weiteres Bauteil und wenigstens eine Vorrichtung nach einer der oben genannten Ausgestaltungen oder einer Kombination von wenigstens zwei dieser Ausgestaltungen miteinander auf, wobei das Plattenelement mittels der Vorrichtung mit dem weiteren Bauteil verbindbar ist.

Mit der Schiffsinnendecke sind die oben mit Bezug auf die Vorrichtung genannten Vorteile entsprechend verbunden.

Im Folgenden wird die Erfindung unter Bezugnahme auf die beigefügten Figuren anhand bevorzugter Ausführungsformen beispielhaft erläutert.

Es zeigt:
Fig. 1 eine schematische und perspektivische Explosionsdarstellung eines Ausführungsbeispiels für eine erfindungsgemäße Vorrichtung;
Fig. 2 eine schematische und perspektivische Darstellung der in Fig. 1 gezeigten Vorrichtung in einem Funktionszustand;
Fig. 3 eine schematische Darstellung eines Ausführungsbeispiels für eine erfindungsgemäße Schiffsinnenwand;
Fig. 4 eine schematische und perspektivische Explosionsdarstellung von Details eines weiteren Ausführungsbeispiels für eine erfindungsgemäße Vorrichtung; und
Fig. 5 eine schematische Darstellung eines weiteren Ausführungsbeispiels für eine erfindungsgemäße Schiffsinnenwand.

In den Figuren sind gleiche bzw. funktionsgleiche Bauteile mit denselben Bezugszeichen versehen. Eine wiederholte Beschreibung solcher Bauteile kann weggelassen sein.

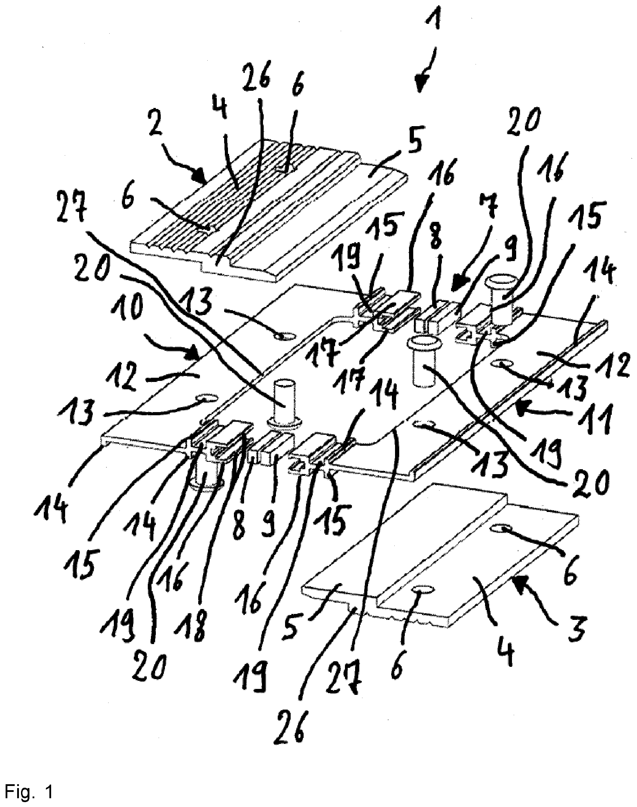

Fig. 1 zeigt eine schematische und perspektivische Explosionsdarstellung eines Ausführungsbeispiels für eine erfindungsgemäße Vorrichtung 1 zum Verbinden eines nicht gezeigten Plattenelements, insbesondere einer nicht gezeigten Schiffsinnenwand oder Schiffsinnendecke, mit einem nicht gezeigten weiteren Bauteil, insbesondere der Schiffsinnenwand oder Schiffsinnendecke.

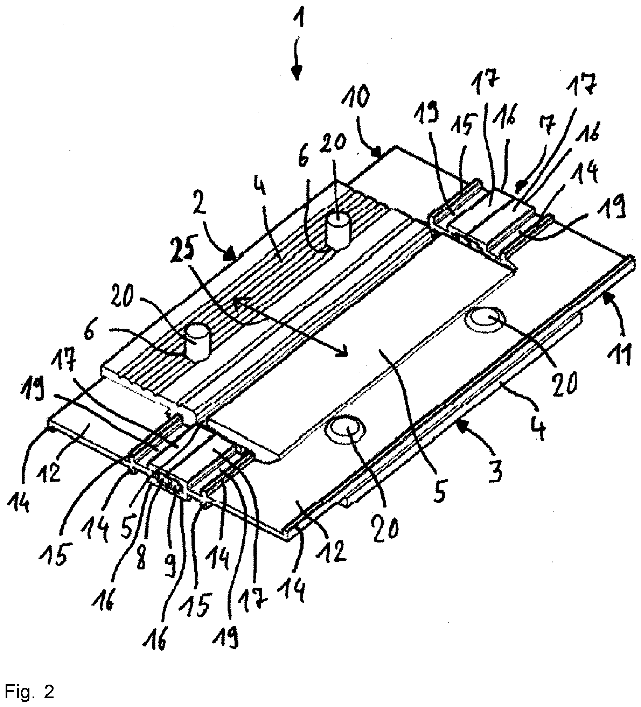

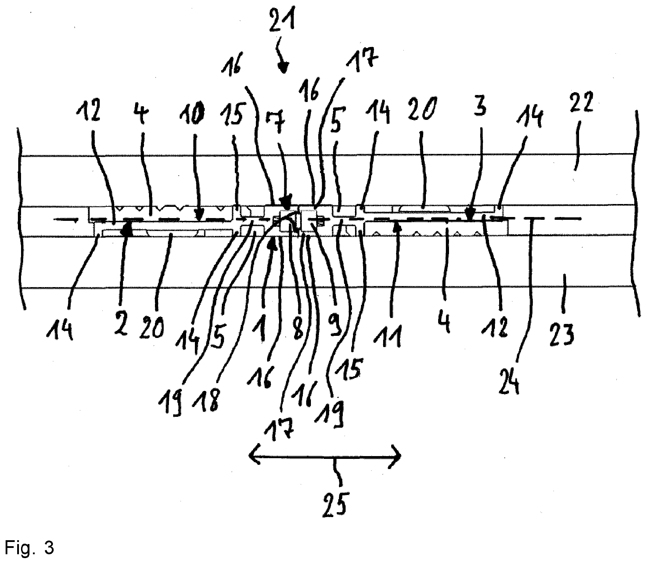

Die Vorrichtung 1 weist ein an dem Plattenelement befestigbares mechanisches Verbindungselement 2 und ein an dem weiteren Bauteil befestigbares weiteres mechanisches Verbindungselement 3 auf. Wie insbesondere die Fign. 2 und 3 zeigen, sind die Verbindungselemente 2 und 3 derart ausgebildet und relativ zueinander anordbar, dass sich die Verbindungselemente 2 und 3 bei bestimmungsgemäß mit dem weiteren Bauteil verbundenem Plattenelement teilweise gegenseitig hintergreifen.

Die Verbindungselemente 2 und 3 sind in dem Ausführungsbeispiel gleich ausgebildet. Jedes Verbindungselement 2 bzw. 3 weist einen Befestigungsabschnitt 4 und einen stufenförmig versetzt zu dem Befestigungsabschnitt 4 angeordneten Verbindungsabschnitt 5 auf, wobei zwischen dem Befestigungsabschnitt 4 und dem Verbindungsabschnitt 5 ein gerade verlaufender Übergangsbereich 26 angeordnet ist. An dem Befestigungsabschnitt 4 sind zwei Durchgangsbohrungen 6 ausgebildet, über die das jeweilige Verbindungselement 2 bzw. 3 an dem Plattenelement bzw. dem weiteren Bauteil befestigbar ist. Jedes Verbindungselement 2 bzw. 3 ist gewissermaßen S-förmig ausgebildet.

Zudem weist die Vorrichtung 1 eine magnetische Verbindungseinrichtung 7 auf, die zwei an dem Plattenelement befestigbare Magnetelemente 8 und zwei an dem weiteren Bauteil befestigbare weitere Magnetelemente 9 aufweist. Die Magnetelemente 8 und 9 sind derart ausgebildet und relativ zueinander und zu den Verbindungselementen 2 und 3 anordbar, dass die Magnetelemente 8 und 9 bei sich teilweise gegenseitig hintergreifenden Verbindungselementen 2 und 3 derart nahe beieinander angeordnet sind, dass zwischen den Magnetelementen 8 und 9 eine magnetische Anziehungskraft mit einem vorgegebenen Mindestwert gegeben ist, die parallel zu einer in Fig. 3 gezeigten Verbindungsebene, in der Verbindungsabschnitte 5 der sich teilweise gegenseitig hintergreifenden Verbindungselemente 2 und 3 aneinander anliegen, und entgegen einer in den Fign. 2 und 3 angedeuteten Löserichtung wirkt, in der die Verbindungselemente 2 und 3 voneinander lösbar sind.

Die magnetische Verbindungseinrichtung 7 weist zudem eine an dem Plattenelement befestigbare Halteeinheit 10, an der die Magnetelemente 8 festlegbar sind, und eine an dem weiteren Bauteil befestigbare weitere Halteeinheit 11, an der die weitere Magnetelemente 9 festlegbar sind, auf. Das Verbindungselement 2 ist über die Halteeinheit 10 mit dem Plattenelement verbindbar und das weitere Verbindungselement 3 ist über die weitere Halteeinheit 11 mit dem weiteren Bauteil verbindbar.

In dem gezeigten Ausführungsbeispiel sind die Halteeinheiten 10 und 11 gleich bzw. als Gleichteile ausgebildet. Die Halteeinheit 10 und/oder die weitere Halteeinheit 11 ist teilweise oder vollständig aus einem Kunststoff, einem faserverstärkten Kunststoff, einem Metall oder einer Metalllegierung hergestellt. Die Halteeinheit 10 und/oder die weitere Halteeinheit 11 ist ein Gussbauteil oder ein 3D-Druck-Bauteil.

Jede Halteeinheit 10 bzw. 11 weist einen Befestigungsabschnitt 12 auf, über den die Halteeinheit 10 bzw. 11 an dem Plattenelement bzw. weiteren Bauteil befestigbar ist. An dem Befestigungsabschnitt 12 sind zwei Durchgangsbohrungen 13 ausgebildet, über die die jeweilige Halteeinheit 10 bzw. 11 an dem Plattenelement bzw. dem weiteren Bauteil befestigbar ist. Die Durchgangsbohrungen 13 der Halteeinheit 10 sind fluchtend zu den Durchgangsbohrungen 6 des Verbindungselements 2 angeordnet und die Durchgangsbohrungen 13 der Halteeinheit 11 sind fluchtend zu den Durchgangsbohrungen 6 des Verbindungselements 3 angeordnet.

An dem Befestigungsabschnitt 12 der jeweiligen Halteeinheit 10 bzw. 11 sind Rippen 14 angeordnet, über die sich die Halteeinheit 10 bzw. 11 an dem weiteren Bauteil bzw. dem Plattenelement abstützen kann, wie es in Fig. 3 gezeigt ist. Auf einer gegenüberliegenden Seite sind an dem Befestigungsabschnitt 12 ebenfalls Rippen 15 angeordnet, über die sich die Halteeinheit 10 bzw. 11 an dem Plattenelement bzw. dem weiteren Bauteil abstützen kann, wie es in Fig. 3 gezeigt ist.

Jede Halteeinheit 10 bzw. 11 weist zudem zwei mit dem Befestigungsabschnitt 12 verbundene, U-förmig ausgebildete Halteabschnitte 16 auf, in denen jeweils ein Magnetelement 8 bzw. 9 unverlierbar aufgenommen werden kann, wozu das jeweilige Magnetelement 8 bzw. 9 seitlich in den jeweiligen Halteabschnitt 16 eingeschoben werden kann. Um das jeweilige Magnetelement 8 bzw. 9 unverlierbar halten zu können, weist jeder Halteabschnitt 16 zwei parallel zueinander ausgerichtete Schenkel 17 auf, an deren freien Enden jeweils ein nach innen ragender Vorsprung 18 ausgebildet ist. Die Vorsprünge 18 des jeweiligen Halteabschnitts 16 verlaufen aufeinander zu und weisen einen Abstand voneinander auf, der kleiner als eine in entsprechender Richtung gegebene Dimension des jeweiligen Magnetelements 8 bzw. 9 ist. Jeder Halteabschnitt 16 ist über einen Steg 19 mit dem jeweiligen Befestigungsabschnitt 12 verbunden. Zwischen den Halteabschnitten 16 der jeweiligen Halteeinheit 10 bzw. 11 ist eine Aussparung 27 an der Halteeinheit 10 bzw. 11 ausgebildet, in der der Verbindungsabschnitt 5 des mit der Halteeinheit 10 bzw. 11 verbundenen Verbindungselements 2 bzw. 3 zumindest teilweise angeordnet werden kann, so dass die Halteabschnitte 16 auf einander gegenüberliegenden Seiten des Verbindungsabschnitts 5 angeordnet sind.

Die Vorrichtung 1 weist ferner pro Verbindungselement 2 bzw. 3 zwei gemeinsame mechanische Verbindungsmittel 20 auf, über die das jeweilige Verbindungselement 2 bzw. 3 und die jeweilige Halteeinheit 10 bzw. 11 an dem Plattenelement bzw. dem weiteren Bauteil befestigbar sind. Hierzu werden die Verbindungsmittel 20 durch die jeweiligen Durchgangsbohrungen 6 und 13 hindurchgeführt und an dem Plattenelement bzw. weiteren Bauteil befestigt.

Fig. 2 zeigt eine schematische und perspektivische Darstellung der in Fig. 1 gezeigten Vorrichtung 1 in einem Funktionszustand, in dem sich die Verbindungselemente 2 und 3 teilweise gegenseitig hintergreifen. Zudem sind die Magnetelemente 8 und 9 derart nahe beieinander angeordnet, dass die magnetische Verbindungseinrichtung 7 eine zur Sicherung der gezeigten Relativstellung zwischen den Verbindungselementen 2 und 3 ausreichende magnetische Anziehungskraft erzeugt. Des Weiteren sind die Verbindungsmittel 20 durch die Durchgangsbohrungen 6 und 13 hindurchgeführt worden. Ferner ist die Löserichtung 25 angedeutet, in der die Verbindungselemente 2 und 3 voneinander lösbar sind.

Fig. 3 zeigt eine schematische Darstellung eines Ausführungsbeispiels für eine erfindungsgemäße Schiffsinnenwand 21. Die Schiffsinnenwand 21 weist ein Plattenelement 22 und ein mit dem Plattenelement 22 verbundenes weiteres Bauteil 23 auf.

Zudem weist die Schiffsinnenwand 21 eine Vorrichtung 1 entsprechend dem in den Fign. 1 und 2 gezeigten Ausführungsbeispiel auf, wobei das Plattenelement 22 mittels der Vorrichtung 1 mit dem weiteren Bauteil 23 verbunden ist. Zur Vermeidung von Wiederholungen wird bezüglich der Beschreibung der Vorrichtung 1 auf die obige Beschreibung zu den Fign. 1 und 2 verwiesen.

Fig. 3 zeigt, dass der Befestigungsabschnitt 12 der Halteeinheit 10 über die Rippen 14 an dem weiteren Bauteil 23 und über die Rippen 15 an dem Verkleidungsbauteil 22 abgestützt ist und dass der Befestigungsabschnitt 12 der Halteeinheit 11 über die Rippen 14 an dem Plattenelement 22 und über die Rippen 15 an dem weiteren Bauteil 23 abgestützt ist. Zudem ist in Fig. 3 die Verbindungsebene 24 gezeigt, in der Verbindungsabschnitte 5 der sich teilweise gegenseitig hintergreifenden Verbindungselemente 2 und 3 aneinander anliegen. Statt der Schiffsinnenwand 21 kann Fig. 3 eine Darstellung einer Schiffsinnendecke sein.

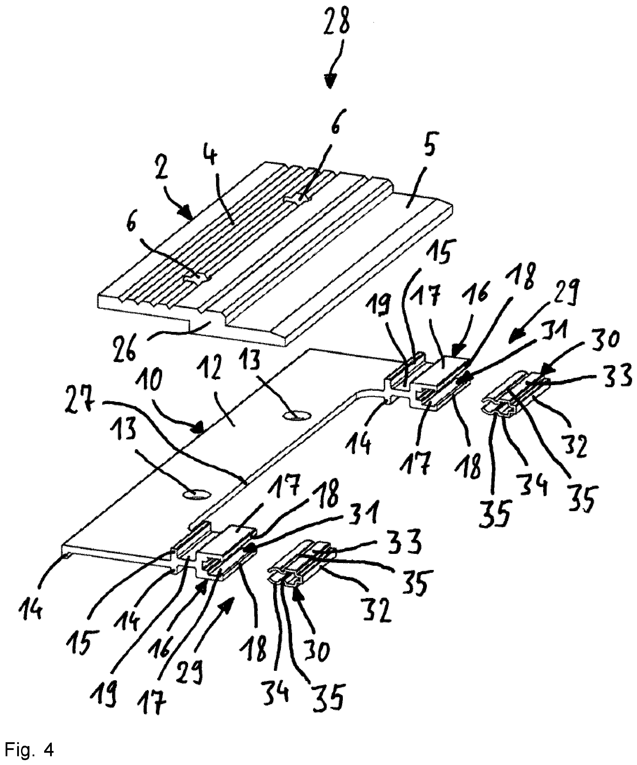

Fig. 4 zeigt eine schematische und perspektivische Explosionsdarstellung von Details eines weiteren Ausführungsbeispiels für eine erfindungsgemäße Vorrichtung 28 zum Verbinden eines nicht gezeigten Plattenelements, insbesondere einer nicht gezeigten Schiffsinnenwand oder Schiffsinnendecke, mit einem nicht gezeigten weiteren Bauteil, insbesondere der Schiffsinnenwand oder Schiffsinnendecke.

Von der Vorrichtung 28 sind lediglich ein Verbindungselement 2, eine Halteeinheit 10 und zwei Klemmfedern 30 gezeigt, wobei das Verbindungselement 2 und die Halteeinheit 10 entsprechend dem in den Fign. 1 bis 3 gezeigten Ausführungsbeispiel ausgebildet sind. Zur Vermeidung von Wiederholungen wird diesbezüglich auf die obige Beschreibung zu den Fign. 1 bis 3 verwiesen. Die Vorrichtung 28 weist zudem eine an dem weiteren Bauteil befestigbare, nicht gezeigte weitere Halteeinheit auf, über die das nicht gezeigte weitere Verbindungselement mit dem weiteren Bauteil verbindbar ist. Die weitere Halteeinheit und das weitere Verbindungselement sind ebenfalls entsprechend dem in den Fign. 1 bis 3 gezeigten Ausführungsbeispiel ausgebildet. Zur Vermeidung von Wiederholungen wird daher auch diesbezüglich auf die obige Beschreibung zu den Fign. 1 bis 3 verwiesen.

Jede Verbindungseinrichtung 29 der Vorrichtung 28 weist eine im Querschnitt U-förmig ausgebildete Klemmfedern 30 auf. Die Halteeinheit 10 weist zwei jeweils U-förmig ausgebildete Halteabschnitte 16 auf, wobei die jeweilige Klemmfeder 30 teilweise unverlierbar in eine Aufnahme 31 des Halteabschnitts 16 der Halteeinheit 10 und teilweise unverlierbar in eine nicht gezeigte Aufnahme des nicht gezeigten Halteabschnitts der nicht gezeigten weiteren Halteeinheit einfügbar ist.

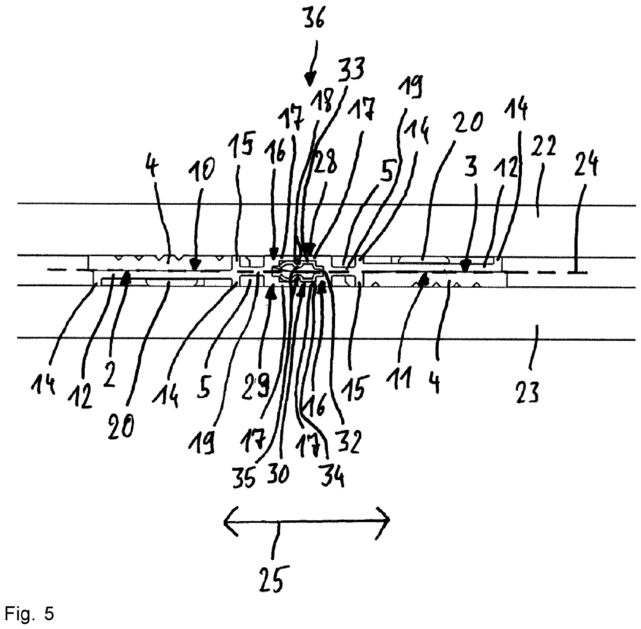

Jede Klemmfeder 30 weist zwei über einen Steg 32 miteinander verbundene Klemmschenkel 33 und 34 auf. An jedem Klemmschenkel 33 bzw. 34 ist eine quer zu einer Längserstreckung des jeweiligen Klemmschenkels 33 bzw. 34 verlaufende Sicke 35 ausgebildet, in die zwei aneinander anliegende Vorsprünge 18 der Halteabschnitte 16 der beiden Halteeinheiten 10 eingreifen, wie es in Fig. 5 gezeigt ist.

Fig. 5 zeigt eine schematische Darstellung eines weiteren Ausführungsbeispiels für eine erfindungsgemäße Schiffsinnenwand 36. Die Schiffsinnenwand 36 weist ein Plattenelement 22 und ein mit dem Plattenelement 22 verbundenes weiteres Bauteil 23 auf.

Zudem weist die Schiffsinnenwand 36 eine Vorrichtung 28 entsprechend dem in Fig. 4 gezeigten Ausführungsbeispiel auf, wobei das Plattenelement 22 mittels der Vorrichtung 28 mit dem weiteren Bauteil 23 verbunden ist. Zur Vermeidung von Wiederholungen wird bezüglich der Beschreibung der Vorrichtung 1 auf die obige Beschreibung zu Fig. 4 verwiesen. Statt der Schiffsinnenwand 36 kann Fig. 5 eine Darstellung einer Schiffsinnendecke sein. Zudem sind das weitere Verbindungselement 3, die weitere Halteeinheit 11 und die Verbindungsmittel 20 der Vorrichtung 28 gezeigt, die entsprechend dem in den Fign. 1 bis 3 gezeigten Ausführungsbeispiel ausgebildet sind. Zur Vermeidung von Wiederholungen wird diesbezüglich auf die obige Beschreibung zu den Fign. 1 bis 3 verwiesen.

Fig. 5 zeigt eine Klemmfeder 30 in ihrem Funktionszustand, in dem zwei aneinander anliegende Vorsprünge 18 der Halteabschnitte 16 der beiden Halteeinheiten 10 und 11 in die Sicken 35 an den Klemmschenkeln 33 und 34 der Klemmfeder 30 eingreifen.

### Bezugszeichenliste

- 1: Vorrichtung
- 2: Verbindungselement
- 3: Verbindungselement
- 4: Befestigungsabschnitt von 2, 3
- 5: Verbindungsabschnitt von 2, 3
- 6: Durchgangsbohrung an 4
- 7: Verbindungseinrichtung
- 8: Magnetelement
- 9: Magnetelement
- 10: Halteeinheit
- 11: Halteeinheit
- 12: Befestigungsabschnitt von 10, 11
- 13: Durchgangsbohrung an 12
- 14: Rippe an 12
- 15: Rippe an 12
- 16: Halteabschnitt von 10, 11
- 17: Schenkel von 16
- 18: Vorsprung an 17
- 19: Steg von 10, 11
- 20: Verbindungsmittel
- 21: Schiffsinnenwand
- 22: Plattenelement
- 23: weiteres Bauteil von 21
- 24: Verbindungsebene
- 25: Löserichtung
- 26: Übergangsbereich zwischen 4 und 5
- 27: Aussparung an 10, 11
- 28: Vorrichtung
- 29: Verbindungseinrichtung
- 30: Klemmfeder
- 31: Aufnahme an 16
- 32: Steg von 30
- 33: Klemmschenkel von 30
- 34: Klemmschenkel von 30
- 35: Sicke an 33, 34
- 36: Schiffsinnenwand

## Patentansprüche

1. Vorrichtung (1, 28) zum Verbinden eines Plattenelements (22), insbesondere einer Schiffsinnenwand (21, 36) oder Schiffsinnendecke, mit einem weiteren Bauteil (23), insbesondere der Schiffsinnenwand (21, 36) oder Schiffsinnendecke, aufweisend wenigstens ein an dem Plattenelement (22) befestigbares mechanisches Verbindungselement (2) und wenigstens ein an dem weiteren Bauteil (23) befestigbares weiteres mechanisches Verbindungselement (3), wobei die Verbindungselemente (2, 3) derart ausgebildet und relativ zueinander anordbar sind, dass sich die Verbindungselemente (2, 3) bei bestimmungsgemäß mit dem weiteren Bauteil (23) verbundenem Plattenelement (22) zumindest teilweise gegenseitig hintergreifen, wobei wenigstens eine Verbindungseinrichtung (7, 29), mittels der das Plattenelement (22) derart mit dem weiteren Bauteil (23) verbindbar ist, dass die Verbindungselemente (2, 3) mit einer Kraft aneinander gekoppelt sind, die parallel zu einer Verbindungsebene (24), in der Verbindungsabschnitte (5) der sich zumindest teilweise gegenseitig hintergreifenden Verbindungselemente (2, 3) zumindest teilweise aneinander anliegen, und entgegen einer Löserichtung (25) wirkt, in der die Verbindungselemente (2, 3) voneinander lösbar sind,
**dadurch gekennzeichnet, dass** die Verbindungseinrichtung (7) der Vorrichtung (1) wenigstens ein an dem Plattenelement (22) befestigbares Magnetelement (8) und wenigstens ein an dem weiteren Bauteil (23) befestigbares weiteres Magnetelement (9) aufweist, wobei die Magnetelemente (8, 9) derart ausgebildet und relativ zueinander und zu den Verbindungselementen (2, 3) anordbar sind, dass die Magnetelemente (8, 9) bei sich zumindest teilweise gegenseitig hintergreifenden Verbindungselementen (2, 3) derart nahe beieinander oder in Kontakt miteinander angeordnet sind, dass zwischen den Magnetelementen (8, 9) eine magnetische Anziehungskraft mit einem vorgegebenen Mindestwert gegeben ist, die parallel zu einer Verbindungsebene (24), in der Verbindungsabschnitte (5) der sich zumindest teilweise gegenseitig hintergreifenden Verbindungselemente (2, 3) zumindest teilweise aneinander anliegen, und entgegen einer Löserichtung (25) wirkt, in der die Verbindungselemente (2, 3) voneinander lösbar sind
oder
dass die Verbindungseinrichtung (29) der Vorrichtung (28) wenigstens eine an dem Plattenelement (22) befestigbare Halteeinheit (10), über die das Verbindungselement (2) mit dem Plattenelement (22) verbindbar ist, wenigstens eine an dem weiteren Bauteil (23) befestigbare weitere Halteeinheit (11), über die das weitere Verbindungselement (3) mit dem weiteren Bauteil (23) verbindbar ist, und wenigstens eine im Querschnitt U-förmig ausgebildete Klemmfeder (30) aufweist, wobei jede Halteeinheit (10, 11) wenigstens einen U-förmig ausgebildeten Halteabschnitt (16) aufweist, wobei die Klemmfeder (30) teilweise unverlierbar in eine Aufnahme (31) des Halteabschnitts (16) der Halteeinheit (10) und teilweise unverlierbar in eine Aufnahme (31) des Halteabschnitts (16) der weiteren Halteeinheit (11) einfügbar ist.

2. Vorrichtung (1) nach Anspruch 1, **dadurch gekennzeichnet, dass** die Verbindungseinrichtung (7) wenigstens eine an dem Plattenelement (22) befestigbare Halteeinheit (10), an der das Magnetelement (8) festgelegt ist, und wenigstens eine an dem weiteren Bauteil (23) befestigbare weitere Halteeinheit (11), an der das weitere Magnetelement (9) festgelegt ist, aufweist, wobei das Verbindungselement (2) über die Halteeinheit (10) mit dem Plattenelement (22) verbindbar ist und das weitere Verbindungselement (3) über die weitere Halteeinheit (11) mit dem weiteren Bauteil (23) verbindbar ist.

3. Vorrichtung (1) nach Anspruch 2, **dadurch gekennzeichnet, dass** die Halteeinheiten (10, 11) gleich ausgebildet sind.

4. Vorrichtung (1) nach Anspruch 2 oder 3, **gekennzeichnet durch** wenigstens ein gemeinsames mechanisches Verbindungsmittel (20), über das einerseits das Verbindungselement (2) und die Halteeinheit (10) an dem Plattenelement (22) oder andererseits das weitere Verbindungselement (3) und die weitere Halteeinheit (11) an dem weiteren Bauteil (23) befestigbar sind.

5. Vorrichtung (1) nach einem der Ansprüche 2 bis 4, **dadurch gekennzeichnet, dass** die Halteeinheit (10) und/oder die weitere Halteeinheit (11) zumindest teilweise aus einem Kunststoff, einem faserverstärkten Kunststoff, einem Metall oder einer Metalllegierung hergestellt ist.

6. Vorrichtung (1) nach einem der Ansprüche 2 bis 5, **dadurch gekennzeichnet, dass** die Halteeinheit (10) und/oder die weitere Halteeinheit (11) ein Stanzbauteil, ein Gussbauteil oder ein 3D-Druck-Bauteil ist.

7. Vorrichtung (28) nach Anspruch 1, **dadurch gekennzeichnet, dass** die Klemmfeder (30) zwei über einen Steg (32) miteinander verbundene Klemmschenkel (33, 34) aufweist, wobei jeder Halteabschnitt (16) zwei parallel zueinander ausgerichtete Schenkel (17) aufweist, an deren freien Enden jeweils ein nach innen ragender Vorsprung (18) ausgebildet ist, wobei die Vorsprünge (18) aufeinander zu verlaufen und einen Abstand voneinander aufweisen und wobei an jedem Klemmschenkel (33, 34) eine quer zu einer Längserstreckung des Klemmschenkels (33, 34) verlaufende Sicke (35) ausgebildet ist, in die zwei aneinander anliegende Vorsprünge (18) der beiden Halteabschnitte (16) eingreifen.

8. Verwendung einer Vorrichtung (1) nach einem der Ansprüche 1 bis 5 oder 7 zum Verbinden eines Plattenelements (22), insbesondere einer Schiffsinnenwand (21, 36) oder Schiffsinnendecke, mit einem weiteren Bauteil (23), insbesondere der Schiffsinnenwand (21, 36) oder Schiffsinnendecke.

9. Schiffsinnenwand (21, 36), aufweisend wenigstens ein Plattenelement (22) und wenigstens ein mit dem Plattenelement (22) verbindbares weiteres Bauteil (23), **gekennzeichnet durch** wenigstens eine Vorrichtung (1) nach einem der Ansprüche 1 bis 5 oder 7, wobei das Plattenelement (22) mittels der Vorrichtung (1) mit dem weiteren Bauteil (23) verbindbar ist.

10. Schiffsinnendecke, aufweisend wenigstens ein Plattenelement (22) und wenigstens ein mit dem Plattenelement (22) verbindbares weiteres Bauteil (23), **gekennzeichnet durch** wenigstens eine Vorrichtung (1) nach einem der Ansprüche 1 bis 5 oder7, wobei das Plattenelement (22) mittels der Vorrichtung (1) mit dem weiteren Bauteil (23) verbindbar ist.

## Claims

1. A device (1, 28) for connecting a plate element (22), in particular of an interior ship wall (21, 36) or interior ship ceiling, to a further component (23), in particular of the interior ship wall (21, 36) or interior ship ceiling, comprising at least one mechanical connecting element (2) attachable to the plate element (22) and at least one further mechanical connecting element (3) attachable to the further component (23), wherein the connecting elements (2, 3) are formed such and can be arranged relative to each other such that, in the case of a plate element (22) in accordance with regulations connected to the further component (23), the connecting elements (2, 3) at least partially mutually engage, wherein at least one connecting device (7, 29), by means of which the plate element (22) can be connected to the further component (23) such that the connecting elements (2, 3) are coupled to each other with a force that, parallel to a connecting plane (24), in which connecting sections (5) of the connecting elements (2, 3) at least partially mutually engaging at least partially lie next to each other, and acts against a releasing direction (25), in which the connecting elements (2, 3) can be released from each other,
**characterized in that** the connecting device (7) of the device (1) comprises at least one magnetic element (8) attachable on the plate element (22) and at least one further magnetic element (9) attachable on the further component (23), wherein the magnetic elements (8, 9) are configured such and can be arranged relative to each other and to the connecting elements (2, 3) such that, in the event of at least partially mutually engaging connecting elements (2, 3) the magnetic elements (8, 9) are arranged close to each other or in contact with each other such that a magnetic attractive force with a predefined minimum value is given between the magnetic elements (8, 9), parallel to a connecting plane (24), in which connecting sections (5) of the connecting elements (2, 3) at least partially mutually engaging at least partially lie next to each other, and acts against a releasing direction (25), in which the connecting elements (2, 3) can be released from each other
or
that the connecting device (29) of the device (28) comprises at least one holding unit (10) attachable to the plate element (22), via which the connecting element (2) can be connected to the plate element (22), at least one further holding unit (11) attachable to the further component (23), via which the further connecting element (3) can be connected to the further component (23), and at least one clamping spring (30) U-shaped in cross-section, wherein each holding unit (10, 11) comprises at least one U-shaped holding section (16), wherein the clamping spring (30) can be at least partially non-removably inserted in a receptacle (31) of the holding section (16) of the holding unit (10) and can be at least partially non-removably inserted in a receptacle (31) of the holding section (16) of the further holding unit (11).

2. The device (1) according to claim 1, **characterized in that** the connecting device (7) comprises at least one holding unit (10) attachable to the plate element (22), at which the magnetic element (8) is fixed, and at least one further holding unit (11) attachable to the further component (23), at which the further magnetic element (9) is fixed, wherein the connecting element (2) can be connected to the plate element (22) via the holding unit (10) and the further connecting element (3) can be connected to the further component (23) via the further holding unit (11) .

3. The device (1) according to claim 2, **characterized in that** the holding units (10, 11) are identically formed.

4. The device (1) according to claim 2 or 3, **characterized by** at least one common mechanical connecting means (20), via which, on the one hand the connecting element (2) and the holding unit (10) are attachable to the plate element (22) or, on the other hand the further connecting element (3) and the further holding unit (11) are attachable to the further component (23).

5. The device (1) according to any of claims 2 to 4, **characterized in that** the holding unit (10) and/or the further holding unit (11) is manufactured at least partially of a plastic, a fiber-reinforced plastic, a metal or a metal alloy.

6. The device (1) according to any of claims 2 to 5, **characterized in that** the holding unit (10) and/or the further holding unit (11) is a punched component, a cast component or a 3D printed component.

7. The device (28) according to claim 1, **characterized in that** the clamping spring (30) comprises two clamping limbs (33, 34) connected to each other via a web (32), wherein each holding section (16) comprises two limbs (17) aligned parallel to each other, at the free ends of which respectively a projection (18) protruding inward is formed, wherein the projections (18) extend to each other and have a distance from each other and wherein at each clamping limb (33, 34) a beading (35) extending transversely to a longitudinal extent of the clamping limb (33, 34) is formed, into which two adjacent projections (18) of the two holding sections (16) engage.

8. The use of a device (1) according to any of claims 1 to 5 or 7 for connecting a plate element (22), in particular of an interior ship wall (21, 36) or of an interior ship ceiling, having a further component (23), in particular of the interior ship wall (21, 36) or interior ship ceiling.

9. An interior ship wall (21, 36) comprising at least one plate element (22) and at least one further component (23) connectable to the plate element (22), **characterized by** at least one device (1) according to any of claims 1 to 5 or 7, wherein the plate element (22) is connectable to the further component (23) by means of the device (1).

10. An interior ship ceiling, comprising at least one plate element (22) and at least one further component (23) connectable to the plate element (22), **characterized by** at least one device (1) according to any of claims 1 to 5 or 7, wherein the plate element (22) is connectable to the further component (23) by means of the device (1).

## Revendications

1. Dispositif (1, 28) pour relier un élément plaque (22), en particulier une paroi intérieure de navire (21, 36) ou un plafond intérieur de navire, à une autre pièce (23), en particulier la paroi intérieure de navire (21, 36) ou le plafond intérieur de navire, présentant au moins un élément de liaison (2) mécanique pouvant être fixé sur l'élément plaque (22) et au moins un autre élément de liaison (3) mécanique pouvant être fixé sur l'autre pièce (23), dans lequel les éléments de liaison (2, 3) sont réalisés et peuvent être disposés les uns par rapport aux autres de telle sorte que les éléments de liaison (2, 3) lorsque l'élément plaque (22) est relié conformément à l'usage prévu à l'autre pièce (23) s'enserrent par l'arrière mutuellement au moins en partie, dans lequel au moins un système de liaison (7, 29), au moyen duquel l'élément plaque (22) peut être relié à l'autre pièce (23) de telle sorte que les éléments de liaison (2, 3) sont accouplés les uns aux autres avec une force qui agit parallèlement à un plan de liaison (24), dans lequel des parties de liaison (5) des éléments de liaison (2, 3) s'enserrant par l'arrière mutuellement au moins en partie s'appliquent au moins en partie les uns sur les autres, et à l'encontre d'une direction de détachement (25), dans laquelle les éléments de liaison (2, 3) peuvent être détachés les uns des autres,
**caractérisé en ce que** le système de liaison (7) du dispositif (1) présente au moins un élément magnétique (8) pouvant être fixé sur l'élément plaque (22) et au moins un autre élément magnétique (9) pouvant être fixé sur l'autre pièce (23), dans lequel les éléments magnétiques (8, 9) sont réalisés et peuvent être disposés les uns par rapport aux autres et par rapport aux éléments de liaison (2, 3) de telle sorte que les éléments magnétiques (8, 9) lorsque les éléments de liaison (2, 3) s'enserrent par l'arrière mutuellement au moins en partie sont disposés à proximité les uns des autres ou en contact les uns avec les autres de telle sorte qu'une force d'attraction magnétique avec une valeur minimale prédéfinie est donnée entre les éléments magnétiques (8, 9), qui agit parallèlement à un plan de liaison (24), dans lequel des parties de liaison (5) des éléments de liaison (2, 3) s'enserrant par l'arrière mutuellement au moins en partie s'appliquent les unes sur les autres au moins en partie, et à l'encontre d'une direction de détachement (25), dans laquelle les éléments de liaison (2, 3) peuvent être détachés les uns des autres
ou
que le système de liaison (29) du dispositif (28) présente au moins une unité de retenue (10) pouvant être fixée sur l'élément plaque (22), par l'intermédiaire de laquelle l'élément de liaison (2) peut être relié à l'élément plaque (22), au moins une autre unité de retenue (11) pouvant être fixée sur l'autre pièce (23), par l'intermédiaire de laquelle l'autre élément de liaison (3) peut être relié à l'autre pièce (23), et au moins un ressort de serrage (30) réalisé en forme de U en section transversale, dans lequel chaque unité de retenue (10, 11) présente au moins une partie de retenue (16) réalisée en forme de U, dans lequel le ressort de serrage (30) peut être introduit en partie de manière imperdable dans un logement (31) de la partie de retenue (16) de l'unité de retenue (10) et au moins en partie de manière imperdable dans un logement (31) de la partie de retenue (16) de l'autre unité de retenue (11).

2. Dispositif (1) selon la revendication 1, **caractérisé en ce que** le système de liaison (7) présente au moins une unité de retenue (10) pouvant être fixée sur l'élément plaque (22), sur laquelle l'élément magnétique (8) est immobilisé, et au moins une autre unité de retenue (11) pouvant être fixée sur l'autre pièce (23), sur laquelle l'autre élément magnétique (9) est immobilisé, dans lequel l'élément de liaison (2) peut être relié à l'élément plaque (22) par l'intermédiaire de l'unité de retenue (10) et l'autre élément de liaison (3) peut être relié à l'autre pièce (23) par l'intermédiaire de l'autre unité de retenue (11).

3. Dispositif (1) selon la revendication 2, **caractérisé en ce que** les unités de retenue (10, 11) sont réalisées de façon identique.

4. Dispositif (1) selon la revendication 2 ou 3, **caractérisé par** au moins un moyen de liaison mécanique (20) commun, par l'intermédiaire duquel d'une part l'élément de liaison (2) et l'unité de retenue (10) peuvent être fixés sur l'élément plaque (22) ou d'autre part l'autre élément de liaison (3) et l'autre unité de retenue (11) peuvent être fixés sur l'autre pièce (23).

5. Dispositif (1) selon l'une quelconque des revendications 2 à 4, **caractérisé en ce que** l'unité de retenue (10) et/ou l'autre unité de retenue (11) est fabriquée au moins en partie à partir d'un plastique, d'un plastique renforcé par des fibres, d'un métal ou d'un alliage de métal.

6. Dispositif (1) selon l'une quelconque des revendications 2 à 5, **caractérisé en ce que** l'unité de retenue (10) et/ou l'autre unité de retenue (11) est une pièce découpée, une pièce coulée ou une pièce imprimée en 3D.

7. Dispositif (28) selon la revendication 1, **caractérisé en ce que** le ressort de serrage (30) présente deux branches de serrage (33, 34) reliées l'une à l'autre par l'intermédiaire d'un élément jointif (32), dans lequel chaque partie de retenue (16) présente deux branches (17) orientées parallèlement l'une à l'autre, sur les extrémités libres desquelles est réalisée respectivement une partie saillante (18) faisant saillie vers l'intérieur, dans lequel les parties saillantes (18) s'étendent l'une vers l'autre et présentent une distance l'une par rapport à l'autre et dans lequel une moulure (35) s'étendant transversalement par rapport à une étendue longitudinale de la branche de serrage (33, 34), dans laquelle s'insèrent deux parties saillantes (18) s'appliquant l'une sur l'autre des deux parties de retenue (16), est réalisée sur chaque branche de serrage (33, 34).

8. Utilisation d'un dispositif (1) selon l'une quelconque des revendications 1 à 5 ou 7 pour la liaison d'un élément plaque (22), en particulier d'une paroi intérieure de navire (21, 36) ou d'un plafond intérieur de navire, à une autre pièce (23), en particulier la paroi intérieure de navire (21, 36) ou le plafond intérieur de navire.

9. Paroi intérieure de navire (21, 36), présentant au moins un élément plaque (22) et au moins une autre pièce (23) pouvant être reliée à l'élément plaque (22), **caractérisée par** au moins un dispositif (1) selon l'une quelconque des revendications 1 à 5 ou 7, dans laquelle l'élément plaque (22) peut être relié à l'autre pièce (23) au moyen du dispositif (1).

10. Plafond intérieur de navire, présentant au moins un élément plaque (22) et au moins une autre pièce (23) pouvant être reliée à l'élément plaque (22), **caractérisé par** au moins un dispositif (1) selon l'une quelconque des revendications 1 à 5 ou 7, dans lequel l'élément plaque (22) peut être relié à l'autre pièce (23) au moyen du dispositif (1).
